# EUROPÄISCHE PATENTSCHRIFT

(11) **EP 0 865 374 B1**
(45) Veröffentlichungstag und Bekanntmachung des Hinweises auf die Patenterteilung: **12.05.1999**
(21) Anmeldenummer: 96941631.2
(22) Anmeldetag: 02.12.1996
(51) Int. Cl.: B62D 5/22

(54) **ZAHNSTANGEN-HILFSKRAFTLENKUNG, INSBESONDERE FÜR KRAFTFAHRZEUGE**
RACK AND SERVO-ASSISTED STEERING SYSTEM, IN PARTICULAR FOR MOTOR VEHICLES
DIRECTION ASSISTEE A CREMAILLERE, NOTAMMENT POUR AUTOMOBILES

(30) Priorität: 06.12.1995 DE 19545439
(43) Veröffentlichungstag der Anmeldung: 23.09.1998
(73) Patentinhaber: ZF FRIEDRICHSHAFEN Aktiengesellschaft, 88038 Friedrichshafen (DE)
(72) Erfinder: HAFERMALZ, Jens-Uwe, D-73525 Schwäbisch Gmünd (DE)
(86) Internationale Anmeldenummer: EP9605320
(87) Internationale Veröffentlichungsnummer: WO9720724

(56) Entgegenhaltungen:
- EP-A- 0 119 923
- DE-A- 1 555 737
- DE-A- 4 242 213
- PATENT ABSTRACTS OF JAPAN vol. 010, no. 336 (M-535), 14.November 1986 & JP 61 139560 A (NIPPON SEIKO KK), 26.Juni 1986,
- PATENT ABSTRACTS OF JAPAN vol. 008, no. 164 (M-313), 28.Juli 1984 & JP 59 059573 A (JIDOSHA KIKI KK), 5.April 1984,

## Beschreibung

Die Erfindung betrifft eine Zahnstangen-Hilfskraftlenkung, insbesondere für Kraftfahrzeuge, nach dem Oberbegriff des Anspruches 1. Die Zahnstangen-Hilfskraftlenkung enthält ein mehrteiliges Lenkgehäuse, das aus einem Ritzelgehäuse und einem Zylindergehäuse mit einem zwischen den beiden Gehäuseteilen angeordneten Verbindungsgehäuse zusammengesetzt ist. In dem Ritzelgehäuse ist ein Ritzel drehbar gelagert. Eine in dem Lenkgehäuse axial verschiebbar geführte Zahnstange wird in dem Ritzelgehäuse durch ein federbelastetes Druckstück in Eingriff mit dem Ritzel gehalten. Die Zahnstange ist über eine Kolbenstange mit einem Kolben verbunden, der in dem Zylindergehäuse zwei Druckräume eines Servomotors voneinander trennt.

Eine derartige Zahnstangen-Hilfskraftlenkung ist aus der DE 15 55 737 A bekannt. Bei dieser Lenkung sind die drei Gehäuseteile zu einem starren, tragenden Lenkgehäuse vereinigt. Die Zahnstange und die mit ihr fest verbundene Kolbenstange sind sowohl in dem Ritzelgehäuse als auch in dem Zylindergehäuse ein- oder mehrfach gelagert und geführt. Bei dieser Anordnung ist die Lage der Zahnstange in dem Lenkgehäuse überbestimmt. Dies kann zu Verspannungen zwischen der Zahnstange und dem Lenkgehäuse führen. Hohe Verschiebekräfte der Zahnstange sind die Folge. Diese Nachteile lassen sich nur durch eine sehr enge Tolerierung der Abmessungen in der Fertigung des Lenkgehäuses und der Zahnstange vermeiden.

Der Erfindung liegt die Aufgabe zugrunde, eine Zahnstangen-Hilfskraftlenkung zu schaffen, bei der eine Überbestimmung der Lagerung der Zahnstange in dem Lenkgehäuse ohne aufwendige Einengung der Toleranzen bei der Fertigung des Lenkgehäuses und der Zahnstange vermieden wird.

Diese Aufgabe wird durch die im Anspruch 1 gekennzeichnete Zahnstangen-Hilfskraftlenkung gelöst. Die Lösung erfolgt dadurch, daß bei einer gattungsgemäßen ZahnstangenHilfskraftlenkung das Verbindungsgehäuse zwischen dem Ritzelgehäuse und dem Zylindergehäuse aus einem elastischen Material besteht. Ein derartiges elastisches Verbindungsgehäuse überträgt keine Kräfte und Momente, sondern dient lediglich zum Korrosionsschutz der Zahnstange. Eine Überbestimmung der Lagerung der Zahnstange in dem Lenkgehäuse ist aufgehoben. Die Lage des Ritzelgehäuses zu dem Zylindergehäuse wird durch die Zahnstange festgelegt.

Zweckmäßige und vorteilhafte Ausgestaltungen der Erfindung sind in den Unteransprüchen angegeben. Die Erfindung ist jedoch nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Zweckmäßigerweise wird das Verbindungsgehäuse aus einem einem Kunststoff hergestellt. Besonders einfach kann das Verbindungsgehäuse aus einem Kunststoffrohr oder einem Kunststoffschlauch hergestellt werden.

Wird die Zahnstange mit der Kolbenstange einteilig ausgebildet, so kann sie im Bereich der Verzahnung einen größeren Querschnitt aufweisen als im Bereich der Kolbenstange. Dadurch kann das kleinere Trägheitsmoment im Bereich der Verzahnung ausgeglichen werden. Dies wird durch die neue Ausbildung des Lenkgehäuses dadurch ermöglicht, daß neue Montageabläufe eingesetzt werden können.

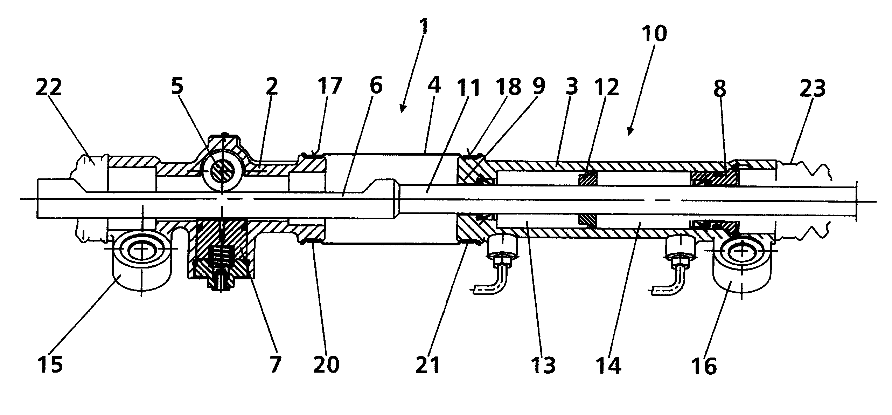

Im folgenden wird die Erfindung anhand eines in der Zeichnung dargestellten Ausführungsbeispieles näher erläutert. Die einzige Figur zeigt einen Längsschnitt durch die erfindungsgemäße Zahnstangen-Hilfskraftlenkung.

Ein mehrteiliges Lenkgehäuse 1 besteht aus einem Ritzelgehäuse 2 und einem Zylindergehäuse 3 mit einem zwischen den beiden Gehäuseteilen angeordneten Verbindungsgehäuse 4.

In dem Ritzelgehäuse 2 ist ein Ritzel 5 drehbar gelagert. Das Ritzel 5 steht über seine Verzahnung in Eingriff mit einer Zahnstange 6, die in dem Lenkgehäuse 1 axial verschiebbar geführt ist. Dazu wird die Zahnstange 6 in dem Ritzelgehäuse 2 mit Hilfe eines federbelasteten Druckstükes 7 in bekannter Weise gegen die Verzahnung des Ritzels 5 gedrückt. In dem Zylindergehäuse 3 ist die Zahnstange in zwei Lagerstellen 8 und 9 geführt und gelagert.

Zur Hilfskraftunterstützung dient ein Servomotor 10, der in dem Zylindergehäuse 3 ausgebildet ist. Eine Kolbenstange 11 ist mit der Zahnstange 6 fest verbunden und trägt einen Kolben 12, der zwei in dem Zylindergehäuse angeordnete Arbeitsräume 13 und 14 voneinander trennt. Zur Steuerung eines von einer nicht dargestellten Druckmittelquelle, beispielsweise einer Servopumpe, geförderten Druckmittels zu und von den beiden Arbeitsräumen 13 und 14 dient in bekannter Weise ein Steuerventil. Das Steuerventil ist nicht erfindungswesentlich und ist deshalb nicht dargestellt.

Das Ritzelgehäuse 2 und das Zylindergehäuse 3 bestehen aus einem metallischen Werkstoff, beispielsweise aus Aluminium-Druckguß bzw. einem Stahlrohr. Das Ritzelgehäuse 2 und das Zylindergehäuse 3 weisen wenigstens je ein Befestigungsauge 15 bzw. 16 zur Befestigung des Lenkgehäuses 1 an einem Fahrzeugrahmen auf. Zweckmäßig ist es, wenn das Ritzelgehäuse 2 mit seinem Befestigungsauge 15 starr am Fahrzeugrahmen befestigt wird, während das Zylindergehäuse 3 mit seinem Befestigungsauge 16 über ein elastisches Zwischenteil am Fahrzeugrahmen festgelegt wird. Mit einer solchen Befestigung des Lenkgehäuses 1 läßt sich eine Überbestimmung der Lage der Zahnstange 6 in dem Lenkgehäuse 1 sicher vermeiden.

Die Lage des Ritzelgehäuses 2 wird durch die Verzahnung der Zahnstange 6 und des Ritzels 5 bestimmt. Dadurch werden alle Winkelfehler der Verzahnungsfertigung des Ritzels 2 und der Zahnstange 6 ausgeglichen. Dies garantiert ein gutes Abrollverhalten.

Das Verbindungsgehäuse 4 besteht aus einem elastischen Material, beispielsweise aus Kunststoff. Besonders einfach läßt sich ein derartiges Verbindungsgehäuse 4 aus einem Kunststoffrohr oder einem Kunststoffschlauch herstellen. Das Kunststoffrohr oder der Kunststoffschlauch des Verbindungsgehäuses 4 läßt sich in je einer Umfangsrille 17 bzw. 18 des Ritzelgehäuses 2 und des Zylindergehäuses 3 mit einer Schlauchschelle 20 bzw. 21 oder einem ähnlichen Befestigungselement befestigen.

An den Enden der Zahnstange 6 bzw. der Kolbenstange 11 können in bekannter Weise Spurstangen befestigt werden. Diese Befestigungsstellen werden durch je einen Faltenbalg 22 bzw. 23 gegen Korrosion geschützt.

Durch die erfindungsgemäße Ausbildung des Lenkgehäuses 1 kann ein neuer Montageablauf gewählt werden: Die Zahnstange 6 und die Kolbenstange 11 müssen nicht mehr, wie bei bekannten Ausführungen, von einer Seite her durch das gesamte Lenkgehäuse hindurchgeschoben werden. Vielmehr kann sowohl das Ritzelgehäuse 2 als auch das Zylindergehäuse 3 jeweils von einer Seite auf die Zahnstange 6 und auf die Kolbenstange 11 aufgeschoben werden. Danach werden beide Gehäuseteile durch das elastische Verbindungsgehäuse 4 miteinander verbunden. Ein solcher Montageablauf schafft die Möglichkeit, die Zahnstange 6 im Bereich ihrer Verzahnung mit einem größeren Durchmesser und Querschnitt auszubilden als die Kolbenstange 11.

### Bezugszeichen

- 1: Lenkgehäuse
- 2: Ritzelgehäuse
- 3: Zylindergehäuse
- 4: Verbindungsgehäuse
- 5: Ritzel
- 6: Zahnstange
- 7: Druckstück
- 8: Lagerstelle
- 9: Lagerstelle
- 10: Servomotor
- 11: Kolbenstange
- 12: Kolben
- 13: Arbeitsraum
- 14: Arbeitsraum
- 15: Befestigungsauge
- 16: Befestigungsauge
- 17: Umfangsrille
- 18: Umfangsrille
- 19: -
- 20: Schlauchschelle
- 21: Schlauchschelle

## Patentansprüche

1. Zahnstangen-Hilfskraftlenkung, insbesondere für Kraftfahrzeuge, mit folgenden Merkmalen:
- ein mehrteiliges Lenkgehäuse (1) weist ein Ritzelgehäuse (2) und ein Zylindergehäuse (3) mit einem zwischen den beiden Gehäuseteilen angeordneten Verbindungsgehäuse (4) auf;
- in dem Ritzelgehäuse (2) ist ein Ritzel (5) drehbar gelagert;
- eine in dem Lenkgehäuse (1) axial verschiebbar geführte Zahnstange (6) wird in dem Ritzelgehäuse (2) durch ein federbelastetes Druchstück (7) in Eingriff mit dem Ritzel (5) gehalten;
- die Zahnstange (6) ist über eine Kolbenstange (11) mit einem Kolben (12) verbunden, der in dem Zylindergehäuse (3) zwei Druckräume (13, 14) eines Servomotors (10) voneinander trennt,
dadurch **gekennzeichnet,** daß das Verbindungsgehäuse (4) aus einem elastischen Material besteht und flexibel ist.

2. Zahnstangen-Hilfskraftlenkung nach Anspruch 1, dadurch **gekennzeichnet,** daß das Verbindungsgehäuse (4) aus einem Kunststoff besteht.

3. Zahnstangen-Hilfskraftlenkung nach Anspruch 2, dadurch **gekennzeichnet,** daß das Verbindungsgehäuse (4) durch ein Kunststoffrohr oder einen Kunststoffschlauch gebildet ist.

4. Zahnstangen-Hilfskraftlenkung nach Anspruch 3, dadurch **gekennzeichnet,** daß das Kunststoffrohr oder der Kunststoffschlauch des Verbindungsgehäuses (4) in je einer Umfangsrille (17, 18) des Ritzelgehäuses (2) und des Zylindergehäuses (3) durch ein Befestigungselement, insbesondere eine Schlauchschelle (20, 21), befestigt ist.

5. Zahnstangen-Hilfskraftlenkung nach Anspruch 1, dadurch **gekennzeichnet,** daß die Zahnstange (6) mit der Kolbenstange (11) einteilig ausgebildet ist und im Bereich der Verzahnung einen größeren Querschnitt aufweist als im Bereich der Kolbenstange (11).

## Claims

1. Rack-and-pinion power-assisted steering system, in particular for motor vehicles, with the following features:
- a multipart steering-gear housing (1) comprises a pinion housing (2) and a cylindrical housing (3) with a connecting housing (4) disposed between the two housing parts;
- a pinion (5) is rotatably mounted in the pinion housing (2);
- a rack (6), which is guided in an axially displaceable manner in the steering-gear housing (1), is held in engagement with the pinion (5) in the pinion housing (2) by a spring-loaded pressure piece (7);
- the rack (6) is connected via a piston rod (11) to a piston (12), which separates two pressure chambers (13, 14) of a servomotor (10) from one another in the cylindrical housing (3),
characterised in that the connecting housing (4) consists of an elastic material and is flexible.

2. Rack-and-pinion power-assisted steering system according to claim 1, characterised in that the connecting housing (4) consists of a plastics material.

3. Rack-and-pinion power-assisted steering system according to claim 2, characterised in that the connecting housing (4) is formed by a plastics tube or a plastics hose.

4. Rack-and-pinion power-assisted steering system according to claim 3, characterised in that the plastics tube or the plastics hose of the connecting housing (4) is secured in a respective circumferential groove (17, 18) of the pinion housing (2) and the cylindrical housing (3) by a securing element, in particular a hose clip (20, 21).

5. Rack-and-pinion power-assisted steering system according to claim 1, characterised in that the rack (6) is integral with the piston rod (11) and has a greater cross section in the region of the teeth than in the region of the piston rod (11).

## Revendications

1. Direction assistée à crémaillére, notamment pour véhicules automobiles, ayant les caractéristiques suivantes :
- un boîtier de direction (1) composé de plusieurs parties comporte un boîtier à pignon (2) et un boîtier à cylindres (3) avec un boîtier de liaison (4) agencé entre les deux éléments de boîtier;
- dans le boîtier à pignon (2) un pignon (5) est monté de façon rotative;
- une crémaillère (6) guidèe de façon à pouvoir se déplacer axialement à l'intérieur du boîtier de direction (1) est maintenue par un organe de pression (7) en prise avec le pignon (5) dans le boîtier à pignon (2);
- la crémaillére (6) est reliée par une tige de piston (11) à un piston (12) qui forme dans le boîtier à cylindres (3), deux chambres à pression (13, 14) d'un servomoteur (10),
**caractérisée** en ce que le boîtier de liaison (4) est réalisé en une matière élastique et est flexible.

2. Direction assistée à crémaillère selon la revendication 1, **caractérisée** en ce que le boîtier de liaison (4) est réalisé en une matière synthétique.

3. Direction assistée à crémaillère selon la revendication 2 **caractérisée** en ce que le boîtier de liaison (4) est formé par un tube en matière synthétique ou un tuyau en matière synthétique.

4. Direction assistée à crémaillére selon la revendication 3, **caractérisée** en ce que le tube en matière synthétique ou le tuyau en matière synthétique du boîtier de liaison (4) est fixé dans une rainure circonférentielle (17, 18) du boîtier à pignon (2) et du boîtier à cylindres (3) par l'intermédiaire d'un élément de fixation, notamment un collier de serrage à tuyaux (20, 21).

5. Direction assistée à crémaillère selon la revendication 1, **caractérisée** en ce que la crémaillère (6) forme une seule pièce avec la tige de piston (11), et présente une plus grosse section dans la zone de la denture que dans la zone de la tige de piston (11).
